**Europäisches Patentamt**

**European Patent Office**

**Office européen des brevets**

(11) Publication number: **0 082 185**

**B1**

# EUROPEAN PATENT SPECIFICATION

(45) Date of publication of patent specification: **23.09.87**

(21) Application number: **82902277.1**

(22) Date of filing: **01.06.82**

(86) International application number:
**PCT/US82/00757**

(87) International publication number:
**WO 83/00098 20.01.83 Gazette 83/02**

(51) Int. Cl.⁴: $B\ 01\ D\ 13/01$, B 01 D 13/04

(54) MICROPOROUS HOLLOW FIBER MEMBRANE ASSEMBLY AND ITS METHOD OF MANUFACTURE.

(30) Priority: **29.06.81 US 278913**

(43) Date of publication of application:
**29.06.83 Bulletin 83/26**

(45) Publication of the grant of the patent:
**23.09.87 Bulletin 87/39**

(84) Designated Contracting States:
**BE CH DE FR GB LI SE**

(56) References cited:
**DE-A-2 721 444**
**GB-A-2 059 802**
**JP-A-55 031 202**
**US-A-3 391 041**
**US-A-3 391 042**
**US-A-3 674 628**
**US-A-3 690 465**
**US-A-3 864 864**
**US-A-3 870 579**
**US-A-3 957 648**
**US-A-4 231 878**

(73) Proprietor: **BAXTER TRAVENOL**
**LABORATORIES, INC.**
**One Baxter Parkway**
**Deerfield, IL 60015 (US)**

(72) Inventor: **LEE, Robert**
**320 Juneau Lane**
**Plymouth, MN 55441 (US)**
Inventor: **SCHNELL, William J.**
**1550 Sandpebble Drive, Unit No. 101**
**Wheeling, IL 60090 (US)**

(74) Representative: **MacGregor, Gordon et al**
**ERIC POTTER & CLARKSON 14 Oxford Street**
**Nottingham, NG1 5BP (GB)**

Courier Press, Leamington Spa, England.

## Description

This application generally relates to permselective membrane assemblies and, more particularly, to permselective membrane assemblies utilizing bundles of microporous hollow fibers.

The use of hollow fiber membranes in selective permeation separation and purification devices and processes is well know. For example, hollow fiber membranes made of a cellulose derivative material find widespread use in hemodialysis. A bundle of these hollow cellulose fibers can be mounted within a tubular housing using conventional potting techniques, such as those disclosed in US—A—3,492,698; 3,442,002; and 4,227,295.

During the potting operations disclosed in these patents, a liquid potting compound, typically polyurethane, is introduced into opposite ends of the housing in which the fiber bundle is carried. The potting compound impregnates the exterior areas of the bundle about and between the ends of the individual fibers.

The potting compound can, and typically does, also enter into both ends of the fiber bores through a process known as "wicking". However, the depth of the potting compound penetrating both ends of the bores is substantially less than·the depth of the potting compound impregnating the exterior areas of the bundle. This is because, due to the non-air permeable character of the cellulose fibers, the air inside the bores is- successively trapped and compressed as the potting compound advances into the bores, and an interior counterpressure is created which eventually inhibits further penetration of potting compound. Thus, once the potting compound has cured, one can cut transversely through the potting compound in advance of the penetrated fiber portions to expose open fiber bores.

Besides cellulose derivative materials, hollow fiber membranes made from a microporous material also find use in selective permeation separation and purification devices and processes. Examples of such use include blood oxygenation, membrane plasmapheresis, and other ultrafiltration processes.

The mounting of a bundle of microporous hollow fiber membranes within a housing utilizing conventional potting techniques can pose difficulties. Unlike the cellulose derivative fibers, microporous fibers are generally air-permeable in character. Thus, during potting operations, the potting compound pentrates, or "wicks", a substantial distance into the bores of the fibers. This is because, as air within the bores escapes through the air-permeable fibers outwardly of the bores in advance of the potting compound, there is no counterpressure developed to inhibit the penetration. As a result, the depth of the potting compound penetrating the bores becomes essentially equal to the depth of the potting compound outside of the bores. It is thus difficult, or even impossible, to open the bores by cutting a transverse section through the cured potting compound.

Known methods of preventing the penetration of the potting compound into the bores of the fibers include plugging the ends of the fibers with a solid material, such as wax, which can be easily and completely removed after the application of the potting compound; or casting an end fitting about the end portion of the bundle inwardly of the exposed bore ends and thereafter severing the projecting ends of the fiber flush with the outer face of the end mold; or forming looped end portions in the fibers which are thereafer cut away after potting. All of these known methods require additional steps and only complicate and add to the cost of the potting operation.

In addition to the difficulties heretofore outlined, the mere act of handling microporous hollow fibers before and during potting operations can also pose a problem. This is because these fibers are typically quite flimsy and without a substantial amount of axial rigidity. Thus, during handling, they are easily stretched, twisted, collapsed, or otherwise damaged, as well as easily moved out of the desired distribution pattern.

US—A—3690465 discloses manufacture of a hollow fiber bundle by laying microporous hollow fibers along one side of a sheet of foraminous material and laying another sheet of foraminous, material on the fibers. Several layers may be provided, or the sandwich of sheets and fibers may be rolled up. The ends of the bundle may then be potted with fluid sealant. This document forms the basis of the precharacterising clause of claim 1.

US—A—3957648 discloses a spirally wound sheet with hollow fibers between the coils and this bundle is also potted at each end.

Neither US—A—3690465 nor US—A—3957648 considers the problem of "wicking" and this problem is overcome by the present invention.

The present invention provides a bundle of fibers of the type disclosed in US—A—3690465 characterised in that each of the hollow fiber ends is bonded to the side of the sheet member on which the fibers are arranged so as to define means closing the hollow fiber ends to the ingress of fluid sealant.

The invention also provides a method for manufacturing the hollow fiber bundle comprising the steps of arranging a plurality of hollow fibers fabricated of a microporous material generally uniformly along one side of a sheet member, characterised by bonding the ends of each of the hollow fibers to the sheet member in a manner which also closes the fiber ends to the ingress of fluid.

By occluding the ends of the fibers in accordance with the invention, the ingress of potting compound into the bores of the fibers during potting operations is prevented. Thus, after the potting compound is cured, a transverse cut through the potting compound serves to sever the occluded ends from the remainder of the bundle and exposes open fiber bores.

Furthermore, by simultaneously bonding the occluded fiber ends to the sheet member in accordance with the invention, a desired uniform distribution of fibers upon the sheet member can be achieved during manufacture of the bundle and can thereafter be maintained during subsequent potting operations. Additionally, the sheet member, in both its normal and its inwardly rolled configurations, serves to protect the fibers from damage or collapse occassioned by handling before and during potting operations.

The bundle of hollow fibers as above described also lends itself to a manufacturing process which is straightforward and does not require the use of overly complicated machinery.

Other features and advantages of the invention will be pointed out in, or will be apparent from, the specification and claims, as will obvious modification of the embodiments shown in the drawings.

Fig. 1 is an exploded, perspective view of a bundle of microporous hollow fibers which embodies various of the features of the invention;

Fig. 2 is a perspective view of the bundle shown in Fig. 1 in an assembled condition;

Fig. 3 is a perspective view of the bundle shown in Fig. 2 in a position inwardly rolled upon itself;

Fig. 4 is a perspective, and partially diagrammatic view of one device which can be utilized to manufacture the bundle shown in Fig. 2 on a large scale basis;

Fig. 5 is a perspective, and partially diagrammatic, view of another device which can be utilized to manufacture the bundle shown in Fig. 2 on a large scale basis;

Fig. 6 is a side view of a permselective membrane device utilizing the hollow fiber bundle shown in Fig. 3 during centrifugal potting operations;

Fig. 7 is a side view of the permselective membrane device shown in Fig. 6 after the completion of potting operations; and

Fig. 8 is an end section view of the permselective membrane device taken generally along line 8—8 in Fig. 7.

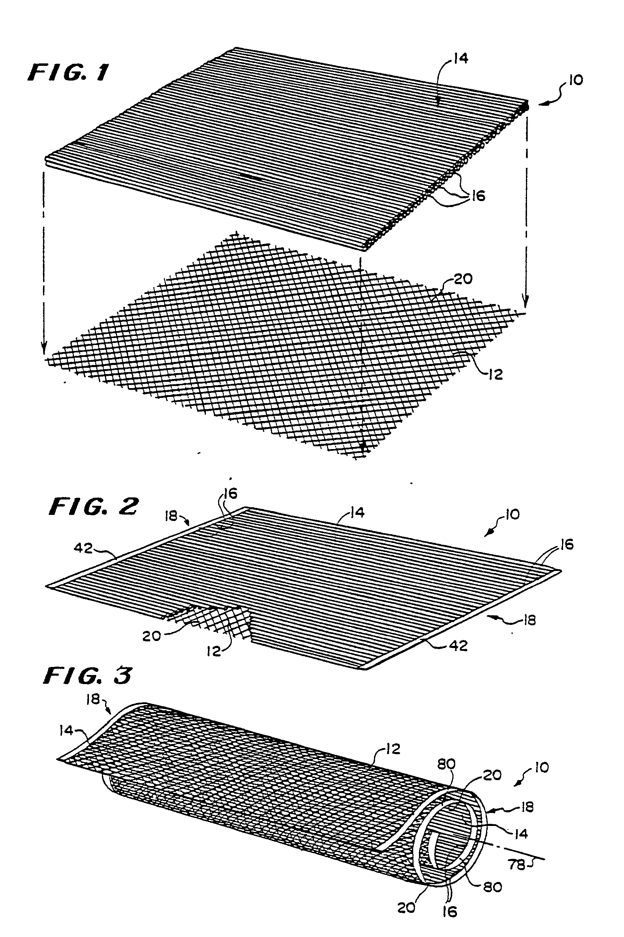

A bundle 10 of microporous hollow fibers applicable for use in various permselective membrane devices is shown in Figs. 1 through 3. Generally, the bundle 10 includes a flexible sheet member 12 on which a plurality of the microporous hollow fibers 14 are carried.

By the term "microporous", it is intended to mean that the walls of the fibers have pores which are permeable to air and other gases, thereby permitting air and gases to readily pass therethrough. However, notwithstanding the air-permeable nature, the fiber walls still retain a semipermeable or permselective characteristic and serve to restrict the flow of a liquid passing through them, as in blood oxygenators, or to restrict the flow a component of the liquid from passing through, such as blood cells in membrane plasmapheresis devices, and in other comparable ultrafiltration processes.

Materials from which a microporous hollow fiber can be made include thermoplastic polymers, such as polypropylene. These polymers can be formed into hollow fibers by know processes such as solution spinning or melt spinning.

For example, a polypropylene hollow fiber can be manufactured which has a wall thickness of approximately 150 µm, an interior diameter of approximately 320 µm, a maximum pore size of approximately .55 µm, and an average pore size of approximately .30 µm. Such a hollow fiber is commercially available from Enka, A. G., Federal Republic of Germany, and is well suited for use in a plasmapheresis procedure to separate the plasma from whole blood.

Because of its air permeable nature, this polypropylene hollow fiber, as well as all microporous hollow fibers in general, does not readily accommodate potting using known potting techniques. This is because, during potting operations, the potting compound can and does easily penetrate and permanently occlude the bores of the fibers.

Furthermore, this polypropylene hollow fiber, as well as most microporous hollow fibers in general, is easily deformed, lacks substantial axial rigidity, and is quite flimsy. It can be easily stretched, crimped, or collapsed during handling, and the maintenance of a uniform arrangement of the fibers before and during potting can pose additional difficulties.

With these problems in mind, the invention provides means 18 for closing the ends 16 of each fiber 14 to the ingress of fluid in a manner which simultaneously bonds the fiber ends 16 to one side 20 of the sheet member 12.

As will be soon become apparent, the resulting bundle 10 shown in Figs. 1 through 3 is compact, easily handled without damaging or collapsing the fibers, and readily accommodates potting using known techniques.

The means 18 for simultaneously closing and bonding the ends 16 of each fiber 14 to the sheet member 12 can vary according to the particular fiber and sheet materials utilized. In the particular embodiment illustrated, in which the fiber 14 is a thermoplastic polymer (i.e. polypropylene), the application of heat to melt and occlude the fiber ends 16 is preferred as being fast and effective. To accommodate this procedure, the sheet member 12 is made of a thin, thermoplastic, and preferably foraminous, material; for example, a flexible, non-woven, polypropylene screen, such as those sold under the trade marks Shell Enjay CD476 or Dart PL-381. The application of heat to occlude the fiber ends 16 thus also simultaneously forms a thermal bond between the occluded ends 16 and the underlying thermoplastic sheet member 12.

It should be appreciated that, by appropriately preselecting and matching the materials utilized for the bundle 10, a thermoplastic resin or an ultrasonic or radiofrequency procedure could be utilized instead of heat to occlude the fiber ends 16 and simultaneously bond the ends 16 to the underlying sheet member 12.

The bundle 10 as heretofore described lends itself to straightforward manufacturing processes. For example, an essentially manual technique can be utilized for small scale production purposes. In this procedure, and as shown in Figs. 1 and 2, the sheet member 12 is cut to a desired width and length, and the fibers 14 pre-cut to the same length (see Fig. 1). The fibers 14 are then manually arranged uniformly along one side of the sheet member 12. The fibers 14 can be arranged in single, double, or multiple layers, depending upon the number of fibers 14 in the bundle 10. The fiber ends 16 are thereafter simultaneously occluded and bonded to the edges of the sheet member 12 by the formation of a heat seal line 42 uniformly across the fiber ends 16 (see Fig. 2), utilizing any commercially available electric heat sealing machine (not shown).

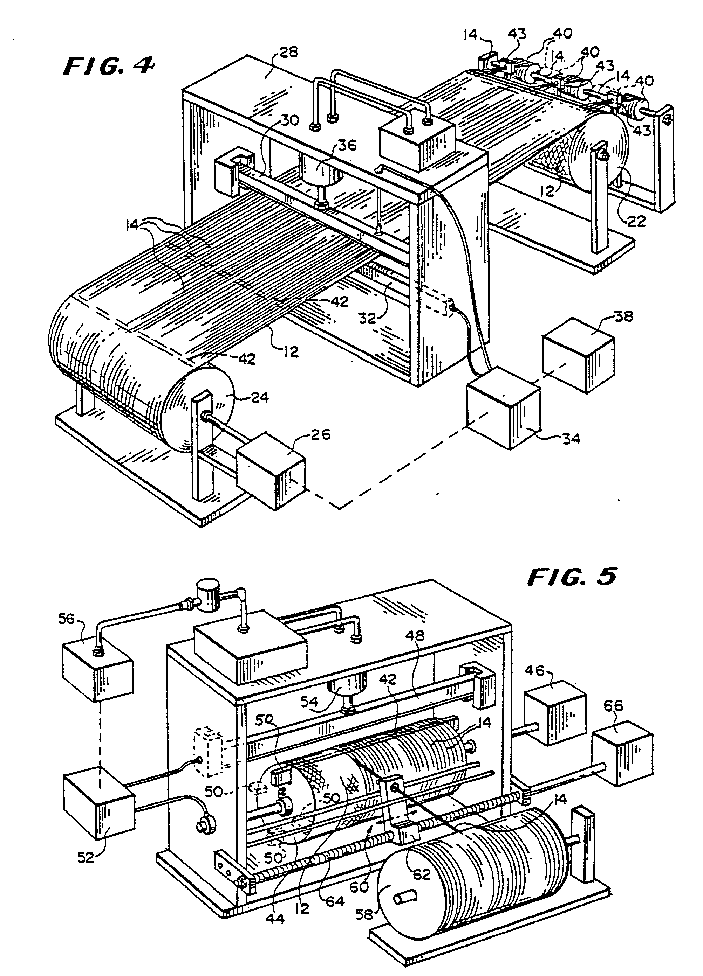

The bundle 10 may also be assembled utilizing mechanized mass production techniques. For example, and as shown in Fig. 4, the material from which of the sheet member 12 is made may be mounted in a continuous length between two rollers 22 and 24, one of which (roller 24 in Fig. 4) is operatively coupled to a drive motor 26 for rotation. The sheet material 12 can thus be fed from the roller 22 and advanced in a conveyor belt fashion onto the roller 24.

Between the two rollers 22 and 24, and spanning the width of the sheet material 12, is a heat sealing mechanism 28. The mechanism 28 may be variously constructed. In the embodiment illustrated in Fig. 4, it includes a movable heat sealing element 30 disposed above the sheet material 12. The movable element 30 is carried by a pneumatic ram 36 which, in turn, is coupled to a pneumatic control circuit 38. The mechanism 28 also includes a stationary heat sealing element 32 disposed below the sheet material 12. Both of the elements 30 and 32 are heated by a suitable electrical control circuit 34 to form the desired heat seal.

In this arrangement, the hollow fibers 14 are carried in continuous lengths on spools 40 disposed adjacent to and behind the feed roller 22.

In operation, the fibers 14 are initially manually distributed on the sheet 12 adjacent to the mechanism 28. The mechanism 28 is then pneumatically operated (using control circuit 38) to bring the movable heat sealing element 30 down to sandwich an area of the sheet material 12 between the two heat sealing elements 30 and 32. The two elements 30 and 32 are thereafter electrically heated (using control circuit 34) to form the continuous heat seal line 42 which simultaneously occludes the fibers 14 and thermally bonds the fibers 14 to the sheet material 12 along the line 42.

The drive motor 26 is thereafter actuated to advance the sheet material 12 and the attached hollow fibers 14 for a predetermined distance. Guides 43 are provided to maintain the desired distribution of fibers 14 on the sheet 12. The drive motor 26 then is stopped, and the heat sealing mechanism 28 again actuated to form another continuous heat seal line 42.

The above described sequence is repeated. Preferably, the drive motor 26, the electrical control circuit 34, and the pneumatic control circuit 38 are electrically interconnected (as shown by phantom lines in Fig. 4) to function automatically to follow the sequence.

Heat seal lines 42 are thereby formed at desired intervals along the sheet material 12 as the sheet material 12 is wound upon the drive roller 24, along which lines 42 the fibers 14 are occluded and bonded to the sheet 12. The sheet material 12 can then be unwound off the drive roller 24, and separated along the heat seal lines 42, such as by cutting, to form a plurality of individual bundles 10, one of which is shown in Fig. 2.

Another method suited for mass production techniques is shown in Fig. 5. In this method, the sheet material 12 is mounted upon a drum 44. The drum 44 is operatively coupled to a drive motor 46 for rotation.

Disposed axially of the rotatable drum 44 (and similar to the arrangement shown in Fig. 4) is a first heat sealing element 48, which is mounted for movement above the drum 44, and a second heat sealing element 50, which is carried by the drum 44 for common rotation therewith and which is disposed beneath the sheet material 12 carried by the drum 44. Both heat sealing elements 48 and 50 are coupled to an electrical control circuit 52, just as the members 30 and 32 in the Fig. 4 embodiment are connected to the electrical control circuit 34.

Also like the Fig. 4 embodiment, the movable element 48 is carried by a pneumatic ram 54 which, in turn, is coupled to a pneumatic control circuit 56.

In this arrangement, the hollow fiber 14 is wound in a continuous length upon a spool 58 disposed axially of the drum 44. The hollow fiber 14 is then evenly distributed from the spool 58 in one or more concentric layers onto the drum-mounted sheet material 12 during rotation of the drum 44 by means of a feeder mechanism 60. The feeder mechanism 60 includes a feeder member 62 which is operatively carried in an axial path along one side of the drum 44 by a worm gear 64 which, in turn, is coupled for rotation to a drive motor 66. The direction of travel of the feeder member 62 (shown by arrows in Fig. 5) is controlled by the direction of rotation of the worm gear 64.

In this arrangement, after the fibers 14 are initially fastened to the sheet member 12, such as by a solvent tack bond, the drive motors 46 and 66 are operated to rotate the drum 44 and drive the feeder mechanism 60. The hollow fibers 14 are evenly distributed back and forth along the sheet member 12. When a desired fiber distribution is achieved, the drive motors 44 and 66 are stopped to place the heat sealing elements 48 and 50 in a facing relationship, as shown in Fig. 5. The control circuits 52 and 56 are then operated, as above described in the Fig. 4 embodiment, to form a continuous heat seal line 42, along which the fibers 14 are occluded and thermally bonded to the sheet material 12.

The sheet member 12 is thereafter separated, such as by cutting, along the heat seal line 42 to form an individual bundle 10 as shown in Fig. 2.

Alternately, by increasing the circumference of the drum 44, and by including additional heat sealing elements 50 disposed at desired arcuate intervals along the expanded drum circumference (as shown in phantom lines in Fig. 5), an increased length of sheet material 12 can be accommodated. Periodic heat seals 42 can then be formed along this circumference, and a plurality of individual bundles 10 may be thus fabricated.

The operative parameters surrounding the formation of the heat seal can, of course, vary according to the particular thermoplastic materials used. It has been observed that, utilizing the polypropylene materials heretofore discussed, and uniformly distributing approximately 800 fiber lengths across an 8 inch (20 cm) width of sheet material, the fibers can be effectively occluded and heat sealed to the sheet material by the application of heat beginning at temperatures approximating 200° to 300°F (43 to 149°C) and gradually raised by operation of the associated control circuit to temperatures approximating 400° to 500°F (204 to 260°C).

The bundle 10 as heretofore described facilitates the handling of the microporous hollow fibers 14 without fear of damaging or collapsing the fibers 14. Because the fibers 14 are disposed along only one side 20 of the sheet member 12, the bundle 10 may be handled with a minimum of physical contact to the fibers 14. Furthermore, since the fiber ends 16 are bonded to the sheet material 12, the fibers 14 are protected against stretching, kinking, or other deformations during handling.

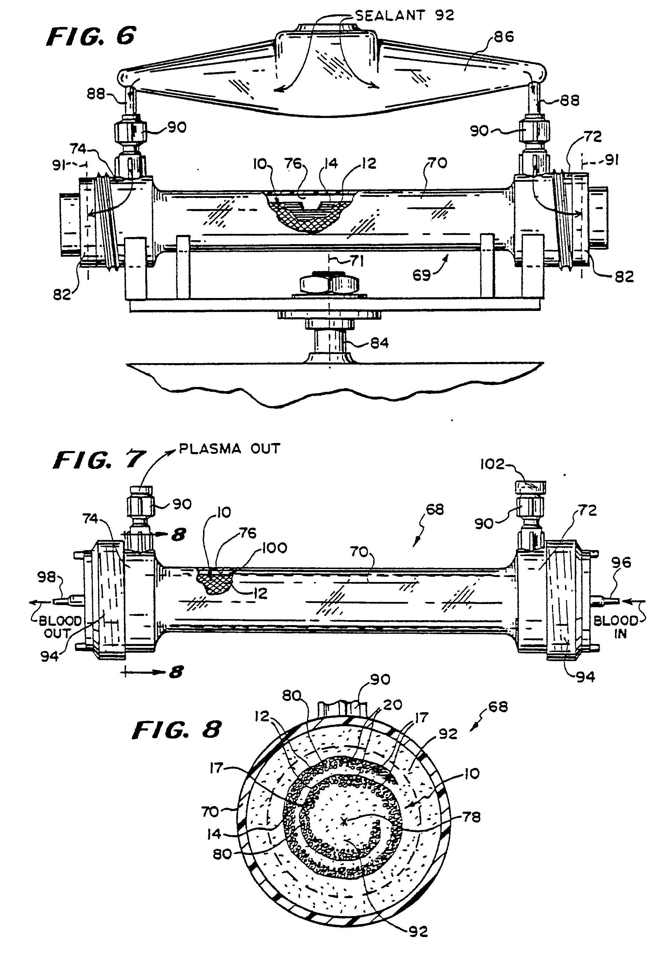

The bundle 10 also facilitates the construction of a permselective membrane device 68 (see Fig. 7) utilizing known potting techniques, such as those techniques disclosed in US—A—4,227,245.

Referring first principally to Fig. 7, the device 68 includes a tubular housing 70 or cannister having opposite ends 72 and 74 and an open interior 76 extending therebetween. The bundle 10 as heretofore, described is carried within the interior 76 of the housing 70 in a loose, inwardly rolled configuration.

More particularly, and referring now principally to Figs. 3 and 8, to accommodate its mounting within the tubular housing 70, the sheet member 12 on which the plurality of hollow fibers is attached can be manually rolled inwardly upon itself in a loose fashion without the need for a central core member about an axis 78 extending generally parallel to the fibers 14.

Because the fibers 14 are disposed only along one side 20 of the sheet member 12, the sheet member 12 may be inwardly rolled with the fibers 14 disposed along only the interior surface of the roll, and thus generally shielded from physical contact as the sheet 12 is being rolled.

When in this loose, inwardly rolled configuration, the bundle 10 defines in transverse cross-section one or more convoluted layers 80, with the fibers 14 arranged along the interior, or inwardly facing, side 20 of each layer 80. The loose, inwardly rolled configuration of the bundle 10 prevents tight, pressing contact between the fibers 14, which could collapse or otherwise cause damage to the fibers 14.

The loose, inwardly rolled bundle 10 can be next manually inserted into the interior 76 of the housing, after which potting operations can proceed on an uninterrupted "one shot" basis.

Referring now principally to Fig. 6, during the potting operations, the housing ends 72 and 74 are each sealingly capped by a cup-shaped closure member 82, which can be attached by solvent bonding. The resulting intermediate assembly 69 is then centrally mounted on a centrifuge rotor 84. An elongated potting boat 86 is attached to the assembly 69 with its outlet ports 88 positioned within apertures 90 formed outwardly of the side of the housing 70.

The centrifuge rotor 84 is thereafter spun about an axis of rotation 71 which generally extends through the center of the housing 70. Potting compound, typically a polyurethane sealant 92, is driven radially outwardly toward both ends of the potting boat 86. From there, the sealant migrates through the outlet ports 88 and side apertures 90 to fill each closure member 82. The flow of sealant 92 is generally shown by arrows in Fig. 6. The inwardly rolled ends of the bundle 10 confined within the closure members 82 are thereby surrounded and enveloped by the sealant 92 (see Fig. 8).

During this step of the potting operation, the ingress of sealant 92 into the bores of the fibers 14 is blocked by the occluded fibers 14 along the heat seal lines 42. The sealant 92 thus impregnates only the exposed exterior portions of the bundle 10, as shown in Fig. 8, enveloping each concentric layer 80 and the exteriors of the hollow fibers 14 disposed therebetween.

Furthermore, because the ends 16 of the fibers 14 are also bonded to the sheet member 12, nesting or movement of the fibers 14 out of their prearranged configuration on the sheet 12 during this step of the procedure is prevented. The desired arrangement of fibers 14 is thus maintained.

The potting sealant 92 is thereafter cured. A transverse cut 91 is then made generally through the middle of the cured sealant 92 at each end 72 and 74 of the housing 70 (the cut lines 91 being shown by phantom lines in Fig. 6). The sealed and bonded ends 16 of the fibers 14 and underlying sheet material 12 are thus severed and removed from the remainder of the bundle 10. Open fiber ends 17 sealingly enveloped by the cured potting sealant 92 (see Fig. 8) are exposed.

It should now be apparent that, by virtue of the invention, the potting characteristics of the bundle 10 of air-permeable microporous hollow fibers 14 approximates the potting characteristics of fibers which are not air permeable, such as those made of a cellulosederivative material.

After severing the sealant 92 along lines 91, end caps 94 (see Fig. 7) of conventional design may be sealed to the potted ends 72 and 74 of the housing 70. The assembly of the permselective microporous hollow fiber membrane device 68 as shown in Fig. 7 is completed.

When asssembled (and still referring to Fig. 7), the device 68 includes a blood inlet port 96 formed on one of the end caps 94, and a blood outlet port 98 formed on the other end cap 94. Blood introduced through the port 96 enters the open ends 17 of the fibers 14. By maintaining a desired level of blood inlet pressure, the plasma will proceed through the micropores of the fibers 14 and out into the open volume 100 circumferentially surrounding the bundle 10. The foraminous character of the sheet member 12 facilitates this plasma flux into the volume 100.

One of the side apertures 90 of the housing 70 is preferably plugged by a plug member 102, and the other aperture 90 is preferably left open to collect the plasma filtratate from the volume 100.

The plasma poor blood (containing red cells, leukocytes, and platelets) exits the open ends 17 of the fibers 14 through port 98, typically for return to the patient-donor.

It should be appreciated that the bundle 10 can be handled and rolled without collapsing and damaging the fibers 14 and without altering the desired distribution of fibers 14 before and during potting operations. Thus a maximum desired plasma flux from the fibers 14 can be achieved. The bundle 10 also permits the use of conventional potting techniques on an uninterrupted basis, without the fear of permanently occluding the bores of the fibers 14 to render them useless for their intended purpose.

It should also be appreciated that the bundle 10 is easily manufactured, whether on a small or large scale, without the need of complicated machinery, such as those involved in winding hollow fibers or otherwise involved in the formation of loops in the end portions of the fibers to prevent the ingress of potting compound.

## Claims

1. A hollow fiber bundle accommodating a potting operation which generally follows the steps of impregnating the ends of said bundle with a curable fluid sealant, curing the sealant, and thereafter transversely cutting through the sealant-impregnated ends of said bundle to expose open bores of the hollow fibers which are surrounded on their exterior by the cured sealant, said hollow fiber bundle (10) comprising a sheet member (12) and a plurality of hollow fibers (14) each having opposite ends (16) and being fabricated of a microporous material and arranged generally uniformly along one side (20) of said sheet member, characterised in that each of the hollow fiber ends (16) is bonded to said one side (20) of the sheet member so as to define means (18) closing the hollow fiber ends to the ingress of fluid sealant.

2. A hollow fiber bundle according to Claim 1, wherein the sheet member (12) is made of a foraminous material.

3. A hollow fiber bundle according to Claim 1 or 2 wherein the hollow fibers (14) are made of a thermoplastic material.

4. A hollow fiber bundle according to claim 1, 2 or 3, wherein the means closing the hollow fiber ends comprises a heat seal line (42) disposed uniformly across each of the fiber ends (16) to occlude the fiber ends and simultaneously bond the ends to the sheet member.

5. A hollow fiber bundle according to Claim 1, 2, 3 or 4, wherein only a single sheet member (12) is provided, the hollow fibers (14) are arranged along only a single side (20) of the sheet member, with said opposite ends (16) of the fibers positioned adjacent opposite side edges of the sheet member, the means (18) closing the hollow fiber ends serving to bond the fiber ends to said adjacent side edges along side (20) of the sheet member, the means (18) including a uniform, continuous heat seal line (42) along each of the side edges, the sheet member, with said hollow fibers secured thereto being rolled upon itself.

6. A hollow fiber bundle according to Claim 5, wherein the hollow fibers (14) extend generally parallel to the axis of the rolled sheet member.

7. A hollow fiber bundle according to Claim 5 or 6, wherein said one side (20) of the sheet member, upon which the hollow fibers (14) are arranged, is the inward side when the sheet member is rolled upon itself.

8. A method of manufacturing a bundle of hollow fibers comprising the steps of arranging a plurality of hollow fibers (14) fabricated of a microporous material generally uniformly along one side (20) of a sheet member (12), characterised by bonding the ends (16) of each of the hollow fibers to the sheet member in a manner which also closes the fiber ends to the ingress of fluid.

9. A method according to Claim 8, further including, after said bonding step, the step of rolling the sheet member (12) inwardly upon itself about an axis extending generally parallel to the fibers to define in transverse cross-section one or more convoluted layers between which the fibers attached to the sheet member are disposed.

10. A method according to claim 8 or 9, wherein the step of arranging the hollow fibers includes advancing a continuous length of material from which the sheet member (12) is made, uniformly distributing along the length of material a plurality of hollow fibers (14) forming a bond between the fibers and the sheet material at preselected intervals, which bond also occludes the fibers at that point, thereby forming a plurality of bonded areas along the continuous length of sheet material, and separating the continuous length of the sheet material along the bonded areas to form a plurality of individual bundles each having a plurality of hollow fibers the end portions of which are occluded and bonded to the sheet material.

11. A method according to Claim 8 or 9, wherein the step of arranging the hollow fibers includes mounting a length of the material from which the sheet member (12) is made upon a rotating drum (44), winding about the circumference of the rotating sheet member a plurality of hollow fibers (14), bonding the fibers to the sheet material along an area extending axially of the axis of drum rotation in a manner which also occludes the fibers at that point, and separating the sheet material (12) along the bonded area to form a generally planar bundle having a plurality of hollow fibers the end portions of which are occluded and bonded to the sheet material.

12. A method according to claim 11, wherein the bonding step includes bonding the fibers (14) to the sheet material (12) along more than one axially extending area, which areas are arcuately spaced about the circumference of the drum (44) and wherein the separation step includes separating the sheet material along each of the bonded areas to form a plurality of individual generally planar bundles (10) each having a plurality of hollow fibers the end portions of which are occluded and bonded to the sheet material.

13. A method according to Claim 8, wherein the bonding step includes heat-sealing the ends of the hollow fibers to the sheet material to attach the ends of each fiber to the sheet material and simultaneously close the fiber ends to the ingress of fluid.

**Patentansprüche**

1. Hohlfaserbündel, das für ein Vergießen geeignet ist, bei dem im allgemeinen die Schritte der Imprägnierung der Enden des Bündels mit einer härtbaren flüssigen Dichtungsmasse, der Härtung der Dichtungsmasse und des anschließenden Durchschneidens quer durch die mit Dichtungsmasse imprägnierten Enden des Bündels aufeinanderfolgen, um offene Öffnungen der Hohlfasern freizulegen, die an ihrer Außenseite von der ausgehärteten Dichtungsmasse umgeben sind, wobei das Hohlfaserbündel (10) ein bogenförmiges Element (12) und eine Vielzahl von Hohlfasern (14) aufweist, die jeweils gegenüberliegende Enden (16) besitzen, aus einem mikroporösem Material hergestellt und im allgemeinen gleichmäßig längs einer Seite (20) des bogenförmigen Elementes angeordnet sind, dadurch gekennzeichnet, daß jedes der Hohlfaserenden (16) mit der einen Seite (20) des bogenförmigen Elementes verbunden ist, um Mittel (18) zu bilden, welche die Hohlfaserenden gegenüber dem Eintritt von flüssiger Dichtungsmasse schließen.

2. Hohlfaserbündel nach Anspruch 1, dadurch gekennzeichnet, daß das bogenförmige Element (12) aus einem perforierten Material besteht.

3. Hohlfaserbündel nach Anspruch 1 oder 2, dadurch gekennzeichnet, daß die Hohlfasern (14) aus einem thermoplastischen Material bestehen.

4. Hohlfaserbündel nach Anspruch 1, 2 oder 3, dadurch gekennzeichnet, daß die Mittel, welche die Hohlfaserenden schließen, eine Heißsiegellinie (42) aufweisen, die gleichmäßig quer über jedem der Faserenden (16) angeordnet ist, um die Faserenden zu verschließen und zugleich die Enden mit dem bogenförmigen Element zu verbinden.

5. Hohlfaserbündel nach Anspruch 1, 2, 3 oder 4, dadurch gekennzeichnet, daß nur ein einziges bogenförmiges Element (12) vorgesehen ist, daß die Hohlfasern (14) nur längs einer einzigen Seite (20) des bogenförmigen Elementes angeordnet sind, wobei die einander gegenüberliegenden Enden (16) der Fasern in der Nähe der gegenüberliegenden Seitenkanten des bogenförmigen Elementes angeordnet sind, daß die Mittel (18), welche die Hohlfaserenden verschließen, dazu dienen, die Faserenden mit den benachbarten Seitenkanten langs der Seite (20) des bogenförmigen Elementes zu verbinden, wobei die Mittel (18) eine gleichmäßige, kontinuierliche Heißsiegellinie (42) längs jeder Seitenkante aufweisen und das bogenförmige Element mit den daran befestigten Hohlfasern auf sich selbst aufgerollt ist.

6. Hohlfaserbündel nach Anspruch 5, dadurch gekennzeichnet, daß die Hohlfasern (14) sich im allgemeinen parallel zur Achse des aufgerollten bogenförmigen Elementes erstrecken.

7. Hohlfaserbündel nach Anspruch 5 oder 6, dadurch gekennzeichnet, daß die eine Seite (20) des bogenförmigen Elementes, auf der die Hohlfasern (14) angeordnet sind, die Innenseite bildet, wenn das bogenförmige Element auf sich selbst aufgerollt ist.

8. Verfahren zur Herstellung eines Hohlfaserbündels, bei dem die Schritte der Anordnung einer Vielzahl von Hohlfasern (14), die aus einem mikroporösem Material hergestellt sind, im allgemeinen gleichmäßig längs einer Seite (20) eines bogenförmigen Elementes (12) erfolgen, gekennzeichnet durch die Verbindung der Enden (16) von jeder der Hohlfasern mit dem bogenförmigen Element in der Weise, daß auch die Faserenden gegenüber dem Eintritt von Fluid geschlossen sind.

9. Verfahren nach Anspruch 8, dadurch gekennzeichnet, daß es nach dem Verbindungsschritt den Schritt des Aufrollens des bogenförmigen Elementes (12) nach innen auf sich selbst um eine Achse aufweist, die sich im allgemeinen parallel zu den Fasern erstreckt, um im Querschnitt eine oder mehrere übereinander gewickelte Schichten zu bilden, zwischen denen die an dem bogenförmigen Element angebrachten Fasern angeordnet sind.

10. Verfahren nach Anspruch 8 oder 9, dadurch gekennzeichnet, daß der Schritt der Anordnung der Hohlfasern den Vorschub einer kontinuierlichen Länge von Material, aus dem das bogenförmige Element (12) besteht, das gleichmäßige Verteilen einer Vielzahl von Hohlfasern (14) längs der Länge des Materials, die eine Verbindung zwischen den Fasern und dem bogenförmigen Element in vorgewählten Intervallen bilden, wobei die Verbindung auch die Fasern an dieser Stelle verschließt, so daß dadurch eine Vielzahl von verbundenen Bereichen über die kontinuierliche Länge des bogenförmigen Materials gebildet wird, und das Trennen der kontinuierlichen Länge des bogenförmigen Materials längs der verbundenen Bereiche umfaßt, um eine Vielzahl von einzelnen Bündeln zu bilden, die jeweils eine Vielzahl von Hohlfasern aufweisen, deren Endbereiche verschlossen und mit dem bogenförmigen Material verbunden sind.

11. Verfahren nach Anspruch 8 oder 9, dadurch gekennzeichnet, daß der Schritt der Anordnung der Hohlfasern das Anbringen einer Länge des Materials, aus dem das bogenförmige Element (12) besteht, auf einer sich drehenden Trommel (44), das Aufwickeln einer Vielzahl von Hohlfasern (14) um den Umfang des sich drehenden bogenförmigen Elementes, das Verbinden der Fasern mit dem bogenförmigen Material längs eines Bereiches, der sich in axialer Richtung der Achse der Trommeldrehung erstreckt, in einer Weise, die auch die Fasern an dieser Stelle verschließt, und das Abtrennen des bogenförmigen Materials (12) längs des verbundenen Bereiches umfaßt, um ein im allgemeinen flächiges Bündel mit einer Vielzahl von Hohlfasern zu bilden, deren Endbereiche verschlossen und mit dem bogenförmigen Material verbunden sind.

12. Verfahren nach Anspruch 11, dadurch gekennzeichnet, daß der Verbindungsschritt das Verbinden der Fasern (14) mit dem bogenförmigen Material (12) längs mehr als einem axial verlaufenden Bereich umfaßt, wobei diese Bereiche gekrümmt beabstandet um den Umfang der Trommel (44) vorgesehen sind, und daß der Trennungsschritt das Trennen des bogenförmigen Materials längs jedes verbundenen Bereiches umfaßt, um eine Vielzahl von einzelnen, im allgemeinen flächigen Bündeln (10) zu bilden, die jeweils eine Vielzahl von Hohlfasern aufweisen, deren Endbereiche verschlossen und mit dem bogenförmigen Material verbunden sind.

13. Verfahren nach Anspruch 8, dadurch gekennzeichnet, daß der Verbindungsschritt eine Heißsiegelung der Enden der Hohlfasern an dem bogenförmigen Material umfaßt, um die Enden jeder Faser an dem bogenförmigen Material anzubringen und zugleich die Faserenden gegenüber dem Eintritt von Flüssigkeit zu verschließen.

**Revendications**

1. Faisceau de fibres creuses permettant une opération de scellement qui suit d'une manière générale les stades d'imprégnation des extrémités dudit faisceau avec un produit de scellement fluide durcissable, un durcissement du produit de scellement et ensuite une coupe transversale à travers les extrémités imprégnées de produit de scellement dudit faisceau, de manière à découvrir les passages intérieurs ouverts des fibres creuses qui sont entourées à l'extérieur par le produit de scellement durci, ledit faisceau (10) de fibres creuses comprenant une feuille (12) et une pluralité de fibres creuses (14) comportant chacune des extrémités opposées (16) et fabriquées en une matière microporeuse et disposées sensiblement uniformément le long d'une face (20) de ladite feuille, caractérisé en ce que chacune des extrémités (16) des fibres creuses est liée à ladite face (20) de la feuille de manière à définir des moyens (18) qui ferment les extrémités des fibres creuses et s'opposer à la pénétration du produit de scellement fluide.

2. Faisceau de fibres creuses suivant la revendication 1, dans lequel la feuille (12) est fabriquée en une matière poreuse ou perforée.

3. Faisceau de fibres creuses suivant la revendication 1 ou 2, dans lequel les fibres creuses (14) sont réalisées en une matière thermoplastique.

4. Faisceau de fibres creuses suivant l'une des revendications 1, 2 ou 3, dans lequel les moyens pour fermer les extrémités des fibres creuses comprennent une ligne de soudure à chaud (42) disposée uniformément en travers de chacune des extrémités de fibre (16) de manière à obturer les extrémités des fibres et à lier simultanément les extrémités à la feuille.

5. Faisceau de fibres creuses suivant l'une des revendications 1, 2, 3 ou 4, dans lequel il est prévu une seule feuille (12), les fibres creuses (14) étant disposées le long d'une seule face (20) de la feuille, lesdites extrémités opposées (16) des fibres étant adjacentes à des bords opposés de la feuille, les moyens (18) d'une part fermant les extrémités des fibres creuses servant à lier les extrémités des fibres auxdits bords adjacents le long de la face (20) de la feuille, et d'autre part comprenant une ligne de soudure thermique continue uniforme (42) le long de chacun des bords, la feuille avec lesdites fibres creuses qui lui sont fixées étant enroulée sur elle-même.

6. Faisceau de fibres creuses suivant la revendication 5, dans lequel les fibres creuses (14) sont disposées sensiblement parallèlement à l'axe de la feuille enroulée.

7. Faisceau de fibres creuses suivant la revendication 5 ou 6, dans lequel ladite face (20) de la feuille, sur laquelle les fibres creuses (14) sont disposées, est la face qui est tournée vers l'intérieur lorsque la feuille est enroulée sur elle-même.

8. Procédé de fabrication d'un faisceau de fibres creuses comprenant les opérations d'agencement d'une pluralité de fibres creuses (14), réalisées en une matière microporeuse, de façon sensiblement uniforme le long d'une face (20) d'une feuille (12), caractérisé en ce qu'il consiste à lier les extrémités (16) de chacune des fibres creuses à la feuille d'une manière qui ferme également les extrémités des fibres pour s'opposer à la pénétration du fluide.

9. Procédé suivant la revendication 8, comprenant en outre, après ladite opération de liaison, l'opération d'enroulement de la feuille (12) vers l'intérieur sur elle-même, autour d'un axe sensiblement parallèle aux fibres, de manière à définir, en section transversale, une ou plusieurs couches enroulées entre lesquelles sont disposées les fibres attachées à la feuille.

10. Procédé suivant la revendication 8 ou 9, dans lequel l'opération d'agencement des fibres creuses comprend l'avance d'une longueur continue de matière à partir de laquelle la feuille (12) est obtenue, la distribution uniforme sur la longueur de matière d'une pluralité de fibres creuses (14), la formation d'une liaison entre les fibres et la feuille, à intervalles prédéterminés, ladite liaison obturant également les fibres à cet endroit, de manière à créer une pluralité de zones liées sur la longueur continue de la feuille, et la séparation de la longueur continue de la feuille le long des zones liées, de manière à engendrer une pluralité de faisceaux individuels comprenant chacun une pluralité de fibres creuses dont les parties d'extrémité sont obturées et liées à la feuille.

11. Procédé suivant la revendication 8 ou 9, dans lequel l'opération d'agencement des fibres creuses comprend le montage d'une longueur d'une matière, à partir de laquelle la feuille (12) est obtenue, sur un tambour rotatif (44); l'enroulement d'une pluralité de fibres creuses (14) autour de la circonférence de la feuille en rotation, la liaison des fibres à la feuille le long d'une zone s'étendant dans la direction axiale de l'axe de rotation du tambour d'une manière qui obture également les fibres à cet endroit, et la séparation de la feuille (12) le long de la zone liée, de manière à engendrer un faisceau sensiblement plan comprenant une pluralité de fibres creuses dont les parties d'extrémité sont obturées et liées à la feuille.

12. Procédé suivant la revendication 11, dans lequel l'opération de liaison comprend la liaison des fibres (14) à la feuille (12) le long de plus d'une zone s'étendant axialement, les zones étant espacées angulairement autour de la circonférence du tambour (44), et dans lequel l'opération de séparation comprend la séparation de la feuille le long de chacune des zones liées, de manière à engendrer une pluralité de faisceaux individuels (10) sensiblement plans, comprenant chacun une pluralité de fibres creuses dont les parties d'extrémité sont obturées et liées à la feuille.

13. Procédé suivant la revendication 8, dans lequel l'opération de liaison comprend le soudage thermique des extrémités des fibres creuses à la feuille, de manière à attacher les extrémités de chaque fibre à la feuille et à obturer simultanément les extrémités des fibres et s'opposer à la pénétration du fluide.

FIG. 1

FIG. 2

FIG. 3

**FIG. 4**

**FIG. 5**

*FIG. 6*

SEALANT 92

*FIG. 7*

PLASMA OUT

*FIG. 8*